# EUROPÄISCHE PATENTSCHRIFT

(11) **EP 3 475 680 B1**
(45) Veröffentlichungstag und Bekanntmachung des Hinweises auf die Patenterteilung: **04.08.2021**
(21) Anmeldenummer: 17735435.4
(22) Anmeldetag: 27.06.2017
(51) Int. Cl.: G01N 1/28, G01N 23/22

(54) **VERFAHREN UND ANLAGE ZUR ANALYSE EINES PROBENMATERIALS**
METHOD AND SYSTEM FOR ANALYSING A SAMPLE MATERIAL
PROCÉDÉ ET SYSTÈME D'ANALYSE D'UN MATÉRIAU ÉCHANTILLON

(30) Priorität: 27.06.2016 DE 102016111694
(43) Veröffentlichungstag der Anmeldung: 01.05.2019
(73) Patentinhaber: thyssenkrupp Industrial Solutions AG, 45143 Essen (DE); thyssenkrupp AG, 45143 Essen (DE)
(72) Erfinder: ENDERS, Michael, 48143 Münster (DE); BORNEFELD, Marc, 33617 Bielefeld (DE); HASSMANN, Hugo, 59514 Welver (DE)
(74) Vertreter: thyssenkrupp Intellectual Property GmbH
(86) Internationale Anmeldenummer: PCT/EP2017/065759
(87) Internationale Veröffentlichungsnummer: WO 2018/001987

(56) Entgegenhaltungen:
- CN-U- 202 453 234
- DE-A1- 1 577 205
- DE-A1- 19 714 504
- FR-A2- 2 578 479
- US-A1- 2009 273 114

## Beschreibung

Die Erfindung betrifft eine Vorrichtung zur Herstellung einer Probenmaterial umfassenden Presstablette und ein Verfahren zur Analyse von in einer Presstablette enthaltenem Probenmaterial. Bei dem Probenmaterial kann es sich insbesondere um solches der Zement- und Mineralsindustrie, beispielsweise um Kalkstein, Dolomit oder Erz, handeln.

Es ist bekannt, derartige Presstabletten herzustellen, indem das Probenmaterial gemahlen, gegebenenfalls mit einem Bindemittel und sonstigen Zugaben vermischt und gepresst wird, wobei infolge der hierfür erforderlichen hohen Drücke automatisierte Pressvorrichtungen eingesetzt werden. Bei den aus der WO 2015/000571 A1 und aus der US 5,257,302 bekannten Verfahren wird jeweils eine das Probenmaterial umfassende Materialmischung zunächst aufgeschmolzen und wieder abgekühlt. Das so entstandene glasige Material wird erst anschließend gemahlen und daraufhin zu einer Presstablette gepresst. In diesen beiden Druckschriften ist auch eine Analyse des Materials der Presstabletten mittels Röntgenfluoreszenzanalyse (XRF) offenbart.

Weiterhin ist in der Veröffentlichung "A Simple Device to Avoid Orientation Effects in X-Ray Diffractometer Samples" von Tj. Peters (Norelco Reporter, 17, 2 (1970) 23-24) eine Analyse mineralogischer Proben mittels einer Röntgenbeugungsanalyse (XRD) offenbart, wobei auch die Problematik beschrieben wird, dass Orientierungseffekte bestimmter gemahlener Probenmaterialien die quantitative Analyse erschweren. Solche Orientierungseffekte sollen zumindest oberflächlich verringert werden können, wenn das Probenmaterial mit einem Stempel gepresst wird, der eine Oberflächenstruktur aus tetragonalen Pyramiden, aufweist, wobei die Strukturtiefe ungefähr 0,25 Millimeter betragen soll.

Aus der FR 2 578 479 A2 ist das Komprimieren von Erde zur Herstellung von Ziegeln bekannt.

Aus der US 2009/273114 A1 ist eine Vorrichtung zur Herstellung von Steinen aus Tonen bekannt.

Aus der DE 15 77 205 A1 ist ein Presserzeug für mechanische Pressen zur Herstellung von Formstücken bekannt.

Aus der CN 202 453 234 U ist eine einfache Pressmaschine mit einer Pressplatte und einem Pressringloch bekannt.

Aus der DE 197 14 504 A1 ist ein Verfahren zum Vorbereiten von Feingutproben in Presslingsform bekannt.

Der Erfindung lag die Aufgabe zugrunde, eine Möglichkeit anzugeben, Probenmaterial, insbesondere solches der Zement- und Mineralsindustrie, in möglichst vorteilhafter Weise mittels einer Röntgenfluoreszenzanalyse oder einer Röntgenbeugungsanalyse zu analysieren.

Diese Aufgabe wird mittels einer Vorrichtung gemäß dem Patentanspruch 1 und einem Verfahren gemäß dem Patentanspruch 10 gelöst. Vorteilhafte Ausgestaltungen der erfindungsgemäßen Vorrichtung und bevorzugte Ausführungsformen des erfindungsgemäßen Verfahrens sind Gegenstände der weiteren Patentansprüche und/oder ergeben sich aus der nachfolgenden Beschreibung der Erfindung.

Der Erfindung liegt die Erkenntnis zugrunde, dass für eine Analyse von Probenmaterial, insbesondere von Probenmaterial der Zement- und Mineralsindustrie, für die primär eine Röntgenfluoreszenzanalyse oder eine Röntgenbeugungsanalyse genutzt werden kann, möglichst optimale Analyseergebnisse lediglich dann erreicht werden können, wenn das Probenmaterial im Hinblick auf die verschiedenen Analysemethoden individuell aufbereitet wurde. Auch wurde erkannt, dass es für ein Erreichen eines möglichst aussagekräftigen Analyseergebnisses sinnvoll sein kann, Probenmaterial sowohl mittels einer Röntgenfluoreszenzanalyse als auch mittels einer Röntgenbeugungsanalyse zu analysieren, wobei wiederum eine möglichst optimal an die einzelnen Analysemethoden angepasste Aufbereitung erfolgen sollte. Dabei wurde weiterhin erkannt, dass sowohl bei einer Röntgenfluoreszenzanalyse als auch bei einer Röntgenbeugungsanalyse die Struktur der Oberfläche einer Presstablette, die aus dem Probenmaterial ausgebildet werden soll, erheblichen Einfluss auf die erreichbare Qualität der Analyse hat. Und schließlich wurde erkannt, dass eine gute Anpassung des Probenmaterials an verschiedene Analysemethoden auf einfache Weise dadurch erreicht werden kann, dass im Rahmen der Herstellung der Presstablette eine an die vorgesehene Analysemethode angepasste Oberfläche erzeugt wird, indem ein entsprechend angepasstes Presswerkzeug eingesetzt wird.

Diesen Erkenntnissen zufolge ist erfindungsgemäß eine Vorrichtung zur Herstellung einer für eine Analyse von Probenmaterial nutzbaren Presstablette vorgesehen, wobei die Vorrichtung ein Presswerkzeug umfasst und das Presswerkzeug zudem mehrere alternativ nutzbare Pressflächen aufweist, die derart in der Vorrichtung positionierbar sind, dass diese alternativ mit einem Stempel der Vorrichtung zusammenwirken können, um ein Probenmaterial zu der Presstablette zu pressen.

Eine erfindungsgemäße Vorrichtung ermöglicht demnach eine schnelle und einfache Anpassung des Presswerkzeugs und damit auch eine Anpassung zumindest einer Oberfläche einer mittels der Vorrichtung herzustellenden Presstablette an eine von mehreren Analysemethoden, anhand der die Presstablette im Anschluss an deren Herstellung analysiert werden soll, ohne dass dafür verschiedene Vorrichtungen erforderlich wären. Dadurch kann ohne größeren Aufwand ein möglichst optimales Analyseergebnis in Abhängigkeit von der gewählten Analysemethode erzielt werden.

Weiterhin ermöglicht eine erfindungsgemäße Vorrichtung auch auf einfache Weise eine aufeinander folgende Analyse einer Presstablette mittels verschiedener Analysemethoden, vorzugsweise einerseits mittels einer Röntgenfluoreszenzanalyse (RFA; XRF) und andererseits mittels einer Röntgenbeugungsanalyse (XRD), wobei die Presstablette mittels der Vorrichtung vor der Durchführung der jeweiligen Analyse hinsichtlich der Struktur zumindest einer Oberfläche, die bei der Analyse genutzt werden soll, angepasst wird.

Dementsprechend ist bei einem erfindungsgemäßen Verfahren zur Analyse einer Probenmaterial umfassenden Presstablette vorgesehen, dass das Probenmaterial unter Verwendung einer ersten Pressfläche einer erfindungsgemäßen Vorrichtung gepresst und die so hergestellte Presstablette analysiert wird und anschließend die Presstablette unter Verwendung einer zweiten Pressfläche erneut gepresst und analysiert wird, wobei vorzugsweise eine der Analysen eine Röntgenfluoreszenzanalyse ist oder zumindest eine solche umfasst und die andere Analyse eine Röntgenbeugungsanalyse ist oder zumindest eine solche umfasst. Dabei kann zuerst die eine Röntgenfluoreszenzanalyse umfassende Analyse und anschließend die eine Röntgenbeugungsanalyse umfassende Analyse durchgeführt werden. In umgekehrter Reihenfolge ist dies gleichfalls vorteilhaft durchführbar.

Eine der Pressflächen der erfindungsgemäßen Vorrichtung ist relativ glattflächig, vorzugsweise möglichst glattflächig (z.B. mittlere Strukturtiefe kleiner 3 µm), und die andere Pressfläche relativ rau ausgebildet ist. Eine möglichst glattflächige Pressfläche kann beispielsweise mittels Schleifen oder auch mittels anderer spannender Nachbearbeitungsverfahren realisiert werden.

Eine Pressfläche mit einer definierten Rauheit kann insbesondere dadurch realisiert werden, dass eine geometrisch gleichmäßige oder eine geometrisch ungleichmäßige Strukturierung, beispielsweise eine pyramidische Strukturierung, in die entsprechende(n) Pressfläche(n) der erfindungsgemäßen Vorrichtung eingebracht wird. Das Einbringen der Strukturierung kann dabei auf beliebige Art und Weise erfolgen, beispielsweise mittels hierzu bitten sich zum Beispiel der von Tj. Peters ("A Simple Device to Avoid Orientation Effects in X-Ray Diffractometer Samples") beschriebene Pyramidenhammer oder auch Papiere mit strukturierter Oberfläche (z.B. Raufasertapete) oder Siebe mit periodischen Maschenmuster an. Vorteilhafterweise kann die mittlere Strukturtiefe der relativ rauen beziehungsweise strukturierten Pressfläche zwischen 3 µm und 250 µm, zwischen 3 µm und 100 µm, zwischen 3 µm und 50 µm oder zwischen 3 µm und 40 µm betragen.

Für eine Analyse von Probenmaterial mittels einer Röntgenfluoreszenzanalyse kann eine möglichst glattflächige Oberfläche der für die Analyse genutzten Presstablette vorteilhaft sein, da insbesondere Röntgenphotonen leichter Elemente (Lithium - Silizium) bereits nach Anregung in der Probe auf dem Weg zum Detektor durch das Probenmaterial bereits intensiv absorbiert werden. Eine rauhe Oberfläche würde die Quantifizierung dieser Röntgenphotonen in der quantitativen Bestimmung durch die unterschiedliche Streckenlänge im Probenmaterial bis zum Übergang aus der Probe in die Messkammer durch das aufgrund der unterschiedlichen Weglänge in der Probe nicht reproduzierbare Absorptionsverhalten verschlechtern. Andererseits kann bei einer Analyse mittels einer Röntgenbeugungsanalyse ein verbessertes Analyseergebnis erzielt werden, wenn durch die Verwendung einer relativ rauen beziehungsweise mit einer geeigneten Strukturierung versehenen Pressfläche eine Ausbildung einer Vorzugsorientierung des pulverförmigen Probenmaterials zumindest in einer oberflächennahen Schicht der daraus ausgebildeten Presstablette verhindert oder vermieden werden kann. Daraus folgend kann bei einem erfindungsgemäßen Verfahren in vorteilhafter Weise vorgesehen sein, dass eine Röntgenfluoreszenzanalyse im Anschluss an das Pressen des Probenmaterials oder der Presstablette mit der relativ glattflächigen und insbesondere möglichst glattflächigen Pressfläche durchgeführt wird, während eine Röntgenbeugungsanalyse im Anschluss an das Pressen des Probenmaterials oder der Presstablette mit der relativ rauen Pressfläche durchgeführt wird. Dabei sind wiederum beide Reihenfolgen möglich, d.h. zunächst kann ein Pressen mit der relativ glattflächigen und insbesondere möglichst glattflächigen Pressfläche und eine sich daran anschließenden Röntgenfluoreszenzanalyse vorgesehen sein, woraufhin die Presstablette erneut gepresst wird, dieses Mal jedoch mit der relativ rauen beziehungsweise strukturierten Pressfläche, so dass diese hinsichtlich der sich nun anschließenden Röntgenbeugungsanalyse optimiert wird. Eine Umkehrung der Reihenfolge hinsichtlich der Analysemethoden und des den Analysen jeweils vorausgehenden Pressens des Probenmaterials oder der Presstablette ist ebenfalls vorteilhaft möglich. Es besteht grundsätzlich die Möglichkeit, das aufeinander folgende Pressen des Probenmaterials oder der Presstablette mittels des Presswerkzeugs der erfindungsgemäßen Vorrichtung, wobei unterschiedliche Pressflächen zum Einsatz kommen, an derselben Oberfläche der Presstablette oder an unterschiedlichen Oberflächen der Presstablette durchzuführen.

Es besteht auch die Möglichkeit, in einer Vorrichtung mindestens zwei Pressflächen vorzusehen, von denen keine möglichst glattflächig ausgebildet ist, sondern beispielsweise beide für die Erzielung einer definierten Rauheit strukturiert ausgebildet sind, wobei sich die Strukturierungen der mindestens zwei Pressflächen hinsichtlich der Rauheit beziehungsweise der mittleren Strukturtiefe, gegebenenfalls auch lediglich oder zusätzlich hinsichtlich der Form der Strukturierungen unterscheiden können. Besonders bevorzugt können auch mehr als zwei Pressflächen in einer erfindungsgemäßen Vorrichtung vorgesehen sein, um eine möglichst optimale Anpassung der mit den Pressflächen in Kontakt kommenden Oberfläche(n) einer Presstablette an eine vorgesehene Analysemethode zu erzielen. Besonders bevorzugt kann dabei vorgesehen sein, dass eine oder zumindest eine der Pressflächen möglichst glattflächig ist, während mehrere andere Pressflächen unterschiedliche Strukturierungen aufweisen.

Erfindungsgemäß weist das Presswerkzeug einen Pressflächenträger auf, der die erste Pressfläche und die zweite Pressfläche umfasst, wobei der Pressflächenträger derart beweglich in die Vorrichtung integriert ist, dass eine Positionierung der einzelnen Pressflächen für das alternative Zusammenwirken mit dem Stempel ermöglicht wird. Dadurch kann insbesondere eine konstruktiv einfache Ausgestaltung für die erfindungsgemäße Vorrichtung realisiert werden.

Alternativ dazu besteht auch die Möglichkeit, dass das Presswerkzeug einen ersten Pressflächenträger, der die erste Pressfläche umfasst, und einen zweiten Pressflächenträger, der die zweite Pressfläche umfasst, aufweist, wobei der zweite Pressflächenträger mit der zweiten Pressfläche in Überdeckung der ersten Pressfläche des ersten Pressflächenträgers bringbar ist, so dass dann die zweite Pressfläche anstelle der ersten Pressfläche mit dem Stempel zusammenwirken kann. Auch eine solche Ausgestaltung kann konstruktive Vorteile aufweisen, weil insbesondere ermöglicht wird, den ersten Pressflächenträger stationär auszubilden, während lediglich der zweite Pressflächenträger beweglich innerhalb der Vorrichtung angeordnet ist. Weiterhin kann dann vorgesehen sein, dass der stationäre erste Pressflächenträger als Gegendruckelement wirkt, an dem sich der zweite Pressflächenträger beim Zusammenwirken mit dem Stempel abstützen kann. Dies wiederum ermöglicht, den beweglichen zweiten Pressflächenträger strukturell relativ einfach beziehungsweise instabil auszubilden oder zumindest innerhalb der Vorrichtung zu lagern, was sich insbesondere vorteilhaft hinsichtlich der konstruktiven Ausgestaltung der die Beweglichkeit des zweiten Pressflächenträgers gewährleistenden Lagerung auswirken kann.

Eine vorteilhafte Weiterbildung einer solchen erfindungsgemäßen Vorrichtung kann dadurch gekennzeichnet sein, dass die erste Pressfläche relativ glattflächig und die zweite Pressfläche relativ rau ausgebildet ist. Dadurch kann beispielsweise eine anderenfalls mögliche Beschädigung einer Strukturierung der ersten Pressfläche infolge einer Abstützung des zweiten Pressflächenträgers vermieden werden.

Sofern die Vorrichtung mehr als zwei Pressflächen umfasst, besteht selbstverständlich auch die Möglichkeit einer Kombination dieser Alternativen hinsichtlich der Positionierung von zwei Pressflächen für ein Zusammenwirken mit dem Stempel zur Ausbildung einer Presstablette, so dass beispielsweise ein erster beweglicher Pressflächenträger mit einer ersten und einer zweiten Pressfläche sowie ein zweiter Pressflächenträger mit zumindest einer (dritten) Pressfläche vorgesehen sein kann, wobei der zweite Pressflächenträger mit der dritten Pressfläche in Überdeckung der ersten oder der zweiten Pressfläche des ersten Pressflächenträgers bringbar ist, so dass dann die dritte Pressfläche anstelle der ersten oder der zweiten Pressfläche mit dem Stempel zusammenwirken kann.

Erfindungsgemäß ist der Pressflächenträger drehbar, insbesondere auch ausschließlich drehbar, in die Vorrichtung integriert ist. Dabei kann besonders bevorzugt vorgesehen sein, dass der entsprechende Pressflächenträger um eine Drehachse, die koaxial oder parallel zu einer Bewegungsachse des Stempels gelegen ist, drehbar in die Vorrichtung integriert ist.

Zusätzlich oder alternativ kann für eine Beweglichkeit eines Pressflächenträgers bei einer erfindungsgemäßen Vorrichtung auch vorgesehen sein, dass diese verschiebbar, insbesondere auch ausschließlich verschiebbar in die Vorrichtung integriert ist. Dabei kann besonders bevorzugt vorgesehen sein, dass der entsprechende Pressflächenträger verschiebbar entlang einer Verschiebeachse, die quer und insbesondere senkrecht bezüglich einer/der Bewegungsachse des Stempels gelegen ist, in die Vorrichtung integriert ist.

In einer weiterhin bevorzugten Ausgestaltung einer erfindungsgemäßen Vorrichtung mit zumindest einem beweglichen Pressflächenträger kann vorgesehen sein, dass dieser verschiebbar entlang einer Verschiebeachse, die koaxial oder parallel zu einer/der Bewegungsachse des Stempels gelegen ist, in die Vorrichtung integriert ist, wobei ein Anschlag vorgesehen ist, durch den eine Verschiebung des Pressflächenträgers oder des zweite Pressflächenträger entlang dieser Verschiebeachse mittels des Stempels begrenzt ist. Dieser Anschlag kann von einem Gegendruckelement ausgebildet sein, dass demnach (auch) dazu dient, die Druckkräfte, die von dem Stempel über das Probenmaterial auf den Pressflächenträger ausgeübt werden, abzustützen, wodurch ermöglicht wird, den Pressflächenträger, der vorzugsweise zusätzlich drehbar oder um eine Achse quer bezüglich dieser Verschiebeachse verschiebbar in die Vorrichtung integriert ist, strukturell relativ einfach auszubilden.

Um mittels des Anschlags eine vorteilhafte Abstützung der durch den Stempel auf den entsprechenden Pressflächenträger ausgeübten Druckkräfte zu realisieren kann weiterhin bevorzugt vorgesehen sein, dass der Anschlag beziehungsweise das den Anschlag ausbildende Gegendruckelement als zumindest die Stempelstirnfläche überdeckend ausgebildet ist.

Zur Realisierung einer vorteilhaften beziehungsweise möglichst exakten Positionierung des oder der beweglichen Pressflächenträger kann/können diese(r) in einer bevorzugten Ausgestaltung der erfindungsgemäßen Vorrichtung mittels eines Antriebs bewegbar sein. Zur Realisierung einer vorteilhaften Automatisierung der erfindungsgemäßen Vorrichtung kann dann besonders bevorzugt vorgesehen sein, dass dieser Antrieb automatisiert ausgebildet ist und hierzu beispielsweise einen mittels einer Steuervorrichtung ansteuerbaren elektrischen Stellmotor umfasst. Der Antrieb kann jedoch auch manuell betätigbar sein, beispielsweise über einen außerhalb eines Gehäuses angeordneten Hebel, dessen manuelle Verschiebung über ein Getriebe in eine Bewegung eines oder mehrerer beweglicher Pressflächenträger übersetzt wird.

Ebenfalls zur Realisierung einer möglichst exakten Positionierung des oder der beweglichen Pressflächenträger kann vorgesehen sein, dass dieser oder diese in den Stellungen, die eine Positionierung der Pressflächen für das alternative Zusammenwirken mit dem Stempel ermöglichen beziehungsweise dafür vorgesehen sind, fixierbar ist/sind. Eine solche Fixierung kann beispielsweise formschlüssig, kraftschlüssig oder auf beliebige andere Weise, beispielsweise durch magnetische Kräfte realisiert werden.

Weiterhin bevorzugt kann für eine erfindungsgemäße Vorrichtung mindestens ein Sensor zur Ermittlung der für ein Zusammenwirken mit dem Stempel positionierten Pressfläche vorgesehen sein, wodurch eine möglichst exakte Positionierung der jeweiligen Pressfläche kontrolliert werden kann. Dadurch kann eine Qualitätssicherung im Rahmen der Herstellung mehrerer Presstabletten unterstützt und gegebenenfalls auch eine Beschädigung von Komponenten der Vorrichtung aufgrund einer Belastung einer hierfür nicht vorgesehenen Komponente oder einem Abschnitt davon mittels des Stempels infolge einer nicht exakten Positionierung der Pressflächen verhindert werden.

In einer weiterhin bevorzugten Ausgestaltung der erfindungsgemäßen Vorrichtung kann auch noch eine Mühle, beispielsweise eine Schwingscheibenmühle, zum Mahlen des Probenmaterials vorgesehen sein, die insbesondere mit den übrigen Komponenten der erfindungsgemäßen Vorrichtung in einer zusammenhängenden Einheit und besonders bevorzugt innerhalb eines Gehäuse integriert ist. Dadurch können die wesentlichen Komponenten, die zum Herstellen einer Presstablette aus Probenmaterial erforderlich sind, in einer Einheit integriert sein. Auf diese Weise kann insbesondere auch ein aufwändiger Transport des gemahlenen Probenmaterials von der Mühle zu der zumindest die ausgewählte Pressfläche und den Stempel umfassenden Pressvorrichtung vereinfacht werden.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand von in den Zeichnungen dargestellten Ausführungsbeispielen näher erläutert. In den Zeichnungen zeigt, jeweils in schematischer Darstellung:
- Fig. 1:: eine erste Ausgestaltungsform einer erfindungsgemäßen Vorrichtung in einer Seitenansicht;
- Fig. 2:: einen Pressflächenträger der Vorrichtung gemäß der Fig. 1 in einer Aufsicht;
- Fig. 3:: einen alternativen Pressflächenträger für eine Vorrichtung gemäß der Fig. 1 in einer Aufsicht;
- Fig. 4:: eine zweite Ausgestaltungsform einer erfindungsgemäßen Vorrichtung in einer Seitenansicht, wobei sich ein Pressflächenträger der Vorrichtung in einer ersten Betriebsstellung befindet;
- Fig. 5:: die Vorrichtung gemäß der Fig. 4, wobei sich der Pressflächenträger in einer zweiten Betriebsstellung befindet;
- Fig. 6:: den Pressflächenträger der Vorrichtung gemäß den Fig. 4 und 5 in einer Aufsicht; und
- Fig. 7:: eine weitere Ausgestaltung einer erfindungsgemäßen Vorrichtung.

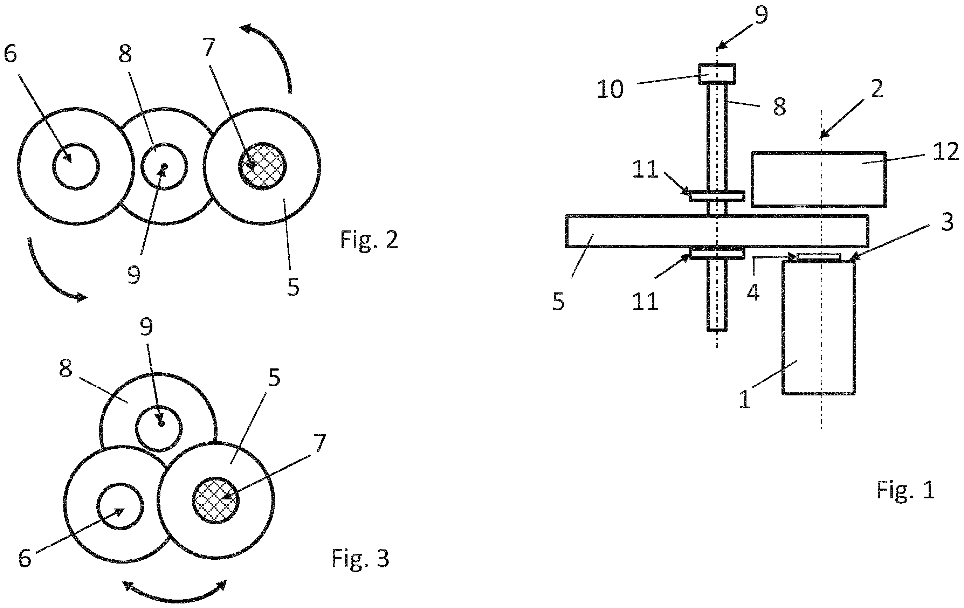

Die Fig. 1 zeigt in einer stark vereinfachten Darstellung eine erste Ausgestaltungsform einer erfindungsgemäßen Vorrichtung zur Herstellung einer für eine Analyse von Probenmaterial nutzbaren Presstablette.

Die Vorrichtung umfasst einen Stempel 1, der mittels eines automatischen Antriebs (nicht dargestellt), der beispielsweise hydraulisch, pneumatisch oder elektromotorisch betrieben sein kann, entlang einer Bewegungsachse verschiebbar ist. Der Stempel 1 bildet an der in der Fig. 1 oberen Stirnseite eine Stempelfläche 3 aus, auf der Probenmaterial 4 in einer Menge, die für die Ausbildung einer Presstablette dosiert wurde, positioniert werden kann.

In einer eingefahrenen Stellung des Stempels 1, wie sie in der Fig. 1 dargestellt ist, ist die Stempelfläche 3 und auch das darauf angeordnete Probenmaterial 4 beabstandet zu einem Pressflächenträger 5 der Vorrichtung angeordnet. Der Pressflächenträger 5 bildet gemäß der Fig. 2 auf der dem Stempel 1 zugewandten (Unter-)Seite 2 Pressflächen 6, 7 aus, die alternativ dafür vorgesehen sind, in Überdeckung der Stempelfläche 3 positioniert zu werden, so dass durch ein Ausfahren des Stempels 1 das Probenmaterial 4 zwischen der Stempelfläche 3 und der ausgewählten Pressfläche 6, 7 des Pressflächenträgers 5 gepresst werden kann, um eine Presstablette auszubilden. Eine alternative Positionierung der Pressflächen 6, 7 wird durch eine drehbare Lagerung des Pressflächenträgers 5 an einem stabförmigen Drehlagerelement 8 erreicht.

Ein seitliches Verdrängen des Probenmaterials 4 beim Pressen kann beispielsweise mittels eines Probenträgers (nicht dargestellt) verhindert werden, innerhalb dessen das Probenmaterial 4 aufgenommen ist. Ein solcher Probenträger kann beispielsweise ringförmig oder auch becherförmig und zudem auch durch das Pressen verformbar ausgebildet sein, wobei dieser zumindest auf der dem Pressflächenträger 5 zugewandten Seite offen ausgebildet ist, um einen direkten Kontakt zwischen der ausgewählten Pressfläche 6, 7 des Pressflächenträgers 5 und dem Probenmaterial 4 zu ermöglichen.

Wie sich aus der Fig. 2 ergibt, können die Zentren der im vorliegenden Ausgestaltungsbeispiel kreisförmigen Pressflächen 6, 7 (Durchmesser: z.B. 2 cm bis 5 cm) gemeinsam mit der Längsachse 9 des Drehlagerelements 8, die der Rotationsachse 9, um die der Pressflächenträger 5 drehbar in die Vorrichtung integriert ist, entspricht, eine Gerade definieren, wobei die Rotationsachse 9 im Wesentlichen exakt mittig zwischen den beiden Zentren der Pressflächen 6, 7 angeordnet ist. Mittels eines automatischen Antriebs 10 kann der Pressflächenträger 5 gemeinsam mit dem Drehlagerelement 8 um die Rotationsachse 9 gedreht werden, wodurch entweder eine erste (6) der Pressflächen 6, 7, die möglichst glattflächig ausgebildet ist, oder die zweite Pressfläche 7, die eine Oberflächenstrukturierung aufweist, derart positioniert werden kann, dass die ausgewählte Pressfläche 6, 7 derart in Überdeckung der Stempelfläche 3 positioniert ist, dass das dazugehörigen Zentrum der Pressfläche 6, 7 in etwa auf der Bewegungsachse 2 des Stempels 1 gelegen ist. Im Zusammenwirken mit dem Stempel 1 kann somit ein Pressen des Probenmaterials 4 zu einer Presstablette bewirkt werden.

Dabei ergibt sich für die entsprechende Seite der Presstablette eine Oberfläche, deren Tiefengeometrie von der verwendeten Pressfläche 6, 7 abhängt. Wird die erste Pressfläche 6 für das Pressen des Probenmaterials 4 genutzt, ergibt sich eine möglichst glattflächige Oberfläche der Presstablette, die für eine Röntgenfluoreszenzanalyse des Probenmaterials besonders vorteilhaft ist. Eine Verwendung der zweiten, definiert strukturierten Pressfläche 7 führt dagegen zu einer gezielten Störung einer Ausbildung von Vorzugsorientierungen der Partikel des Probenmaterials beim Pressen in zumindest einer oberflächennahen Schicht, wodurch insbesondere eine Analyse des Probenmaterials 4 mittels einer Röntgenbeugungsanalyse positiv beeinflusst werden kann.

Gemäß der Fig. 1 ist der Pressflächenträger 5 nicht nur drehbar sondern auch in Grenzen, die durch zwei Anschlagelemente 11 definiert sind, verschiebbar auf dem Drehlagerelement 8 gelagert, wobei diese Verschiebbarkeit entlang der Längsachse 9 des Drehlagerelements 8 und damit im Wesentlichen parallel bezüglich der Bewegungsachse 2 des Stempels 1 möglich ist. In der durch das untere Anschlagelement 11 begrenzten Stellung, die der Pressflächenträger 5 vorzugsweise ausschließlich schwerkraftbedingt selbsttätig einnimmt, ist der Pressflächenträger 5 mit dem die ausgewählte Pressfläche 6, 7 umfassenden Abschnitt nicht nur in einem definierten Abstand bezüglich der Stempelfläche 3 des Stempels 1 (in dessen eingefahrener Stellung) und auch von auf der Stempelfläche 3 angeordnetem Probenmaterial (und gegebenenfalls einem das Probenmaterial aufnehmenden Probenträger) angeordnet, sondern auch in einem definierten Abstand bezüglich eines in Überdeckung der Stempelfläche 3 angeordneten Gegendruckelements 12. Diese Abstände ermöglichen in vorteilhafter Weise ein Drehen des Pressflächenträgers 5 um die Rotationsachse 9 ohne in einen Kontakt mit dem Stempel 1, einem darauf angeordneten Probenträger oder darauf angeordnetem Probenmaterial 4 oder mit dem Gegendruckelement 12 zu kommen. Wird der Stempel 1 dagegen zum Pressen des Probenmaterials 4 ausgefahren, führt der Druck, den der Stempel 1 über das Probenmaterial 4 auf den Pressflächenträger 5 ausübt, zunächst zu einer Verschiebung des Pressflächenträgers 5 entlang des Drehlagerelements 8, bis dieser mit seiner den Pressflächen 6, 7 abgewandten (Ober-)Seite an dem als Anschlag dienenden Gegendruckelement 12 anliegt, wodurch dann eine weitere Verschiebung des Pressflächenträgers 5 verhindert wird und folglich der von dem Stempel 1 ausgeübte Druck zum Pressen des Probenmaterials 4 genutzt werden kann. Das Gegendruckelement 12 dient demnach der Abstützung der Druckkraft, die von dem Stempel 1 über das Probenmaterial 4 auf den Pressflächenträger 5 ausgeübt wird. Dadurch wird ermöglicht, den Pressflächenträger 5 und das diesen lagernde Drehlagerelement 8 vergleichsweise einfach und relativ instabil auszubilden, da die hohen Druckkräfte, die von dem Stempel 1 auf diese Komponenten ausgeübt werden können, von diesen im Wesentlichen nicht abgestützt werden müssen.

Die Fig. 3 zeigt eine alternative Ausgestaltung eines Pressflächenträgers 5, wie er bei einer Vorrichtung gemäß der Fig. 1 zum Einsatz kommen kann. Anders als bei dem Pressflächenträger 5 gemäß der Fig. 2 ist die Rotationsachse 9 beziehungsweise die Längsachse 9 des Drehlagerelements 8 beabstandet zu derjenigen Geraden angeordnet, die die beiden Zentren der Pressflächen 6, 7 miteinander verbindet, wobei dennoch ein im Wesentlichen identischer Abstand zwischen der Rotationsachse 9 und den Zentren der Pressflächen 6, 7 gegeben ist.

Für eine alternative Positionierung der zwei Pressflächen 6, 7 in Überdeckung der Stempelfläche 3 und damit für ein Zusammenwirken mit dem Stempel 1 zur Ausbildung einer Presstablette aus Probenmaterial ist bei einem Pressflächenträger 5 gemäß der Fig. 2 eine Drehung um 180 Grad erforderlich, während bei dem Pressflächenträger 5 gemäß der Fig. 3 eine Drehung um weniger als 180° erforderlich ist.

Sowohl bei einer Vorrichtung mit einem Pressflächenträger 5 gemäß der Fig. 2 als auch bei einer solchen mit einem Pressflächenträger 5 gemäß der Fig. 3 kann vorgesehen sein, den Pressflächenträger 5 für einen Wechsel zwischen den zwei Pressflächen 6, 7 stets in einer Drehrichtung zu drehen, wie dies beispielsweise in der Fig. 2 anhand der Einfachpfeile angedeutet ist. Andererseits ist es auch möglich, den Pressflächenträger 5 für einen Wechsel zwischen den zwei Pressflächen 6, 7 alternierend in den beiden Drehrichtungen zu drehen, wie dies beispielsweise in der Fig. 3 anhand des Doppelpfeils angedeutet ist.

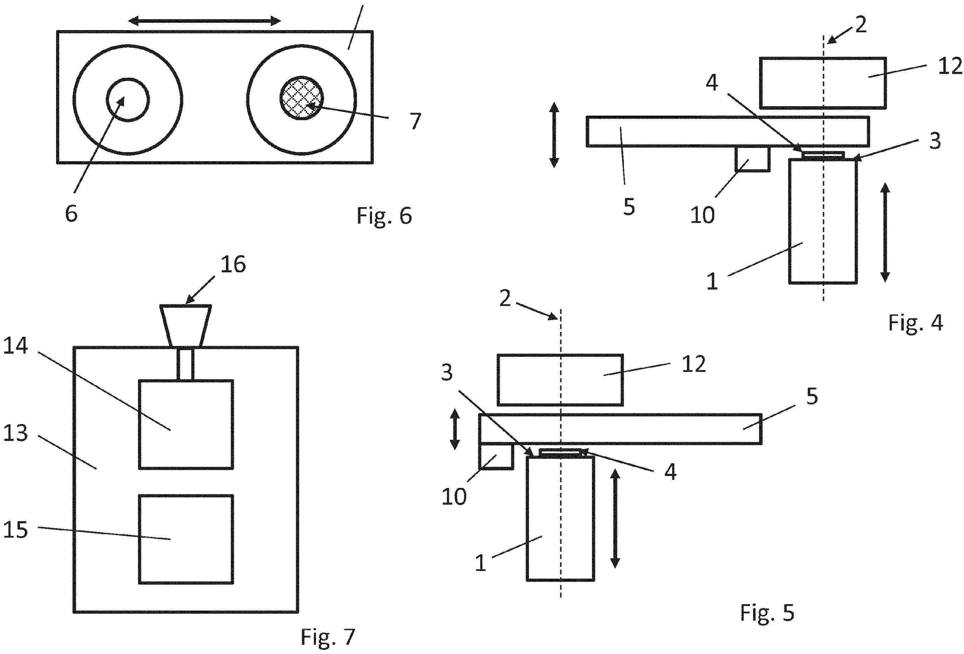

Die Ausgestaltungsform einer erfindungsgemäßen Vorrichtung gemäß den Fig. 4 bis 6 unterscheidet sich von derjenigen gemäß den Fig. 1 bis 3 im Wesentlichen ausschließlich in der Beweglichkeit, die die jeweilige Lagerung des Pressflächenträgers 5 ermöglicht.

Bei der Ausgestaltungsform gemäß den Fig. 4 bis 6 ist anstelle einer drehbaren Lagerung eines Pressflächenträgers 5 eine Verschiebbarkeit entlang einer Verschiebeachse, die senkrecht bezüglich einer Bewegungsachse 2 eines Stempels 1 der Vorrichtung ausgerichtet ist, vorgesehen (vgl. Doppelpfeil in der Fig. 6). Dabei ist diese Verschiebbarkeit zusätzlich zu einer Verschiebbarkeit entlang einer Verschiebeachse, die parallel oder koaxial bezüglich der Bewegungsachse 2 des Stempels 1 angeordnet ist, vorgesehen (vgl. Doppelpfeile in den Fig. 4 und 5), so dass auch bei der Vorrichtung gemäß den Fig. 4 bis 6 eine Positionierung einer von zwei Pressflächen 6, 7 in Überdeckung der Stempelfläche 2 des Stempels 1 erfolgen kann, ohne dass der Pressflächenträger 5 in einen Kontakt mit dem Stempel 1, mit darauf angeordnete Probenmaterial 4 (beziehungsweise einem das Probenmaterial 4 aufnehmenden Probenträger) oder mit einem Gegendruckelement 12 kommen würde. Die Fig. 4 zeigt eine Betriebsstellung des Pressflächenträgers 5, in der eine zweite Pressfläche 7 in Überdeckung einer Stempelfläche 3 des Stempels 1 positioniert ist, während die Fig. 5 eine Betriebsstellung zeigte, in der eine erste Pressfläche 6 entsprechend positioniert ist. Infolge der zusätzlichen Verschiebbarkeit des Pressflächenträgers 5 entlang der koaxial oder parallel zu der Bewegungsachse 2 des Stempels 1 ausgerichteten Verschiebeachse kann wie bei dem Ausgestaltungsbeispiel gemäß den Fig. 1 bis 3 ein Abstützen einer von dem Stempel 1 über das Probenmaterial 4 auf den Pressflächenträger 5 ausgeübten Druckkraft durch dessen Anschlagen an dem Gegendruckelement 12 abgestützt werden.

In einer dazu alternativen Ausgestaltung, die in den Zeichnungen nicht dargestellt ist, kann auch vorgesehen sein, den Pressflächenträger 5 verschiebbar entlang einer Achse, die quer und insbesondere senkrecht bezüglich der Bewegungsachse 2 des Stempels 1 ausgerichtet ist, an dem Gegendruckelement 12 selbst zu führen, beispielsweise mittels einer Schwalbenschwanzführung, wodurch auf eine bewegliche Lagerung des Pressflächenträgers 5 entlang einer parallel oder koaxial bezüglich der Bewegungsachse 2 des Stempels 1 ausgerichteten Verschiebeachse verzichtet werden kann.

In der Fig. 7 ist eine erfindungsgemäße Vorrichtung dargestellt, die innerhalb eines Gehäuses 13 sowohl eine Mühle 14, beispielsweise eine Schwingscheibenmühle, als auch eine Pressvorrichtung 15 integriert, wobei die Pressvorrichtung 15 als erfindungsgemäße Vorrichtung, wie sie in den Fig. 1 bis 3 oder den Fig. 4 bis 6 dargestellt ist, ausgebildet sein kann. Die Mühle 14 dient dazu, Probenmaterial 4, das über eine von dem Gehäuse 13 ausgebildete Materialaufgabe 16 in die Mühle 14 aufgegebenen worden ist, fein zu mahlen und somit für ein Pressen in der Pressvorrichtung 15 aufzubereiten.

### Bezugszeichenliste:

1. Stempel
2. Bewegungsachse des Stempels
3. Stempelfläche
4. Probenmaterial
5. Pressflächenträger
6. erste Pressfläche
7. zweite Pressfläche
8. Drehlagerelement
9. Längsachse des Drehlagerelement / Rotationsachse des Pressflächenträgers
10. Antrieb
11. Anschlagelement des Drehlagerelements
12. Gegendruckelement
13. Gehäuse
14. Mühle
15. Pressvorrichtung
16. Materialaufgabe

## Patentansprüche

1. Vorrichtung zur Herstellung einer für eine Analyse von Probenmaterial nutzbaren Presstablette, wobei die Vorrichtung ein Presswerkzeug umfasst, wobei das Presswerkzeug mehrere alternativ nutzbare Pressflächen (6, 7) aufweist, die derart in der Vorrichtung positionierbar sind, dass diese alternativ mit einem Stempel (1) der Vorrichtung zusammenwirken können, um ein Probenmaterial zu der Presstablette zu pressen, wobei eine der Pressflächen (6) relativ glattflächig und die andere Pressfläche (7) relativ rau ausgebildet ist, wobei das Presswerkzeug einen Pressflächenträger (5) aufweist, der eine erste Pressfläche (6) und eine zweite Pressfläche (7) umfasst, wobei der Pressflächenträger (5) derart beweglich in die Vorrichtung integriert ist, dass eine Positionierung der Pressflächen (6, 7) für das alternative Zusammenwirken mit dem Stempel (1) möglich ist, wobei der Pressflächenträger (5) drehbar in die Vorrichtung integriert ist.

2. Vorrichtung gemäß Anspruch 1, **dadurch gekennzeichnet, dass** der Pressflächenträger (5) um eine Rotationsachse (9), die koaxial oder parallel zu einer Bewegungsachse (2) des Stempels (1) gelegen ist, drehbar in die Vorrichtung integriert ist.

3. Vorrichtung gemäß einem der Ansprüche 1 bis 2, **dadurch gekennzeichnet, dass** der Pressflächenträger (5) verschiebbar in die Vorrichtung integriert ist.

4. Vorrichtung gemäß Anspruch 3, **dadurch gekennzeichnet, dass** der Pressflächenträger (5) verschiebbar entlang einer Verschiebeachse, die quer und insbesondere senkrecht bezüglich einer/der Bewegungsachse (2) des Stempels (1) ausgerichtet ist, in die Vorrichtung integriert ist.

5. Vorrichtung gemäß einem der Ansprüche 1 bis 4, **dadurch gekennzeichnet, dass** der Pressflächenträger (5) verschiebbar entlang einer Verschiebeachse, die koaxial oder parallel zu einer/der Bewegungsachse (2) des Stempels (1) ausgerichtet ist, in die Vorrichtung integriert ist, wobei ein Anschlag vorgesehen ist, durch den eine Verschiebung des Pressflächenträgers (5) entlang dieser Verschiebeachse mittels des Stempels (1) begrenzt ist.

6. Vorrichtung gemäß einem der Ansprüche 1 bis 5, **dadurch gekennzeichnet, dass** der Pressflächenträger (5) mittels eines Antriebs (10) bewegbar ist.

7. Vorrichtung gemäß einem der Ansprüche 1 bis 6, **dadurch gekennzeichnet, dass** der Pressflächenträger (5) in den Stellungen, die eine Positionierung der Pressflächen (6, 7) für das alternative Zusammenwirken mit dem Stempel ermöglichen, fixierbar ist.

8. Vorrichtung gemäß einem der vorhergehenden Ansprüche, **gekennzeichnet durch** einen Sensor zur Ermittlung der für ein Zusammenwirken mit dem Stempel (1) positionierten Pressfläche (6, 7).

9. Vorrichtung gemäß einem der vorhergehenden Ansprüche, **gekennzeichnet durch** eine Mühle (14) zum Mahlen des Probenmaterials (4).

10. Verfahren zur Analyse von in einer Presstablette enthaltenem Probenmaterial (4) unter Verwendung einer Vorrichtung gemäß einem der vorhergehenden Ansprüche, wobei das Probenmaterial (4) unter Verwendung einer ersten Pressfläche (6) gepresst und die so hergestellte Presstablette analysiert wird und anschließend die Presstablette unter Verwendung einer zweiten Pressfläche (7) erneut gepresst und analysiert wird.

11. Verfahren gemäß Anspruch 10, **dadurch gekennzeichnet, dass** eine der Analysen eine Röntgenfluoreszenzanalyse und die andere Analyse eine Röntgenbeugungsanalyse umfasst.

12. Verfahren gemäß Anspruch 11, **dadurch gekennzeichnet, dass** die Röntgenfluoreszenzanalyse im Anschluss an das Pressen des Probenmaterials (4) oder der Presstablette mit der relativ glattflächigen Pressfläche (6) und die Röntgenbeugungsanalyse im Anschluss an das Pressen des Probenmaterials (4) oder der Presstablette mit der relativ rauen Pressfläche (7) durchgeführt wird.

## Claims

1. Apparatus for producing a compressed tablet utilizable for an analysis of sample material, wherein the apparatus comprises a press tool, wherein the press tool has a plurality of alternatively utilizable press surfaces (6, 7), which are positionable in the apparatus such that they can interact alternatively with a punch (1) of the apparatus to compress a sample material to form the compressed tablet, wherein one of the press surfaces (6) is relatively smooth and the other press surface (7) is relatively rough, wherein the press tool has a press surface carrier (5) comprising a first press surface (6) and a second press surface (7), wherein the press surface carrier (5) is integrated into the apparatus so as to be movable such that it is possible to position the press surfaces (6, 7) for the alternative interaction with the punch (1), wherein the press surface carrier (5) is integrated into the apparatus so as to be rotatable.

2. Apparatus according to Claim 1, **characterized in that** the press surface carrier (5) is integrated into the apparatus so as to be rotatable about an axis of rotation (9), which is located coaxially or parallel to a movement axis (2) of the punch (1).

3. Apparatus according to one of Claims 1 to 2, **characterized in that** the press surface carrier (5) is integrated into the apparatus so as to be displaceable.

4. Apparatus according to Claim 3, **characterized in that** the press surface carrier (5) is integrated into the apparatus so as to be displaceable along a displacement axis, which is aligned transversely and in particular perpendicularly with respect to a/the movement axis (2) of the punch (1).

5. Apparatus according to one of Claims 1 to 4, **characterized in that** the press surface carrier (5) is integrated into the apparatus so as to be displaceable along a displacement axis, which is aligned coaxially or parallel to a/the movement axis (2) of the punch (1), wherein a stop delimiting a displacement of the press surface carrier (5) along said displacement axis by means of the punch (1) is provided.

6. Apparatus according to one of Claims 1 to 5, **characterized in that** the press surface carrier (5) is movable by means of a drive (10).

7. Apparatus according to one of Claims 1 to 6, **characterized in that** the press surface carrier (5) is fixable in the positions that make it possible to position the press surfaces (6, 7) for the alternative interaction with the punch.

8. Apparatus according to one of the preceding claims, **characterized by** a sensor for ascertaining the press surface (6, 7) that is positioned for an interaction with the punch (1).

9. Apparatus according to one of the preceding claims, **characterized by** a mill (14) for milling the sample material (4).

10. Method for analysing sample material (4) contained in a compressed tablet using an apparatus according to one of the preceding claims, wherein the sample material (4) is compressed using a first press surface (6) and the compressed tablet thus produced is analysed, and subsequently the compressed tablet is compressed again using a second press surface (7) and is analysed.

11. Method according to Claim 10, **characterized in that** one of the analyses is an X-ray fluorescence analysis and the other analysis is an X-ray diffraction analysis.

12. Method according to Claim 11, **characterized in that** the X-ray fluorescence analysis is performed following the compression of the sample material (4) or of the compressed tablet with the relatively smooth press surface (6) and the X-ray diffraction analysis is performed following the compression of the sample material (4) or of the compressed tablet with the relatively rough press surface (7).

## Revendications

1. Dispositif de production d'un comprimé qui peut être utilisé pour une analyse de matériau échantillon, le dispositif comprenant un outil de pressage, l'outil de pressage comportant plusieurs surfaces de pressage (6, 7) qui sont utilisables alternativement et qui peuvent être positionnées dans le dispositif de manière à pouvoir coopérer alternativement avec un poinçon (1) du dispositif afin de presser un matériau échantillon pour obtenir un comprimé, l'une des surfaces de pressage (6) étant relativement lisse et l'autre surface de pressage (7) étant relativement rugueuse, l'outil de pressage comportant un support de surface de pressage (5) qui comprend une première surface de pressage (6) et une deuxième surface de pressage (7), le support de surface de pressage (5) étant intégré de manière mobile dans le dispositif de telle sorte qu'un positionnement des surfaces de pressage (6, 7) est possible pour la coopération alternative avec le poinçon (1), le support de surface de pressage (5) étant intégré de manière rotative dans le dispositif.

2. Dispositif selon la revendication 1, **caractérisé en ce que** le support de surface de pressage (5) est intégré dans le dispositif de manière rotative sur un axe de rotation (9) qui est situé coaxialement ou parallèlement à un axe de déplacement (2) du poinçon (1) .

3. Dispositif selon l'une des revendications 1 à 2, **caractérisé en ce que** le support de surface de pressage (5) est intégré de manière coulissante dans le dispositif.

4. Dispositif selon la revendication 3, **caractérisé en ce que** le support de surface de pressage (5) est intégré dans le dispositif de manière coulissante le long d'un axe de coulissement qui est orienté transversalement et notamment perpendiculairement à un axe ou l'axe de déplacement (2) du poinçon (1).

5. Dispositif selon l'une des revendications 1 à 4, **caractérisé en ce que** le support de surface de pressage (5) est intégré dans le dispositif de manière coulissante le long d'un axe de coulissement qui est coaxial ou parallèle à un axe ou l'axe de déplacement (2) du poinçon (1), une butée étant prévue qui permet de limiter un coulissement du support de surface de pressage (5) le long de cet axe de coulissement au moyen du poinçon (1).

6. Dispositif selon l'une des revendications 1 à 5, **caractérisé en ce que** le support de surface de pressage (5) est déplaçable au moyen d'un entraînement (10).

7. Dispositif selon l'une des revendications 1 à 6, **caractérisé en ce que** le support de surface de pressage (5) peut être fixé dans les positions qui permettent le positionnement des surfaces de pressage (6, 7) pour la coopération alternative avec le poinçon.

8. Dispositif selon l'une des revendications précédentes, **caractérisé par** un capteur destiné à déterminer la surface de pressage (6, 7) positionnée pour la coopération avec le poinçon (1).

9. Dispositif selon l'une des revendications précédentes, **caractérisé par** un broyeur (14) destiné à broyer le matériau échantillon (4).

10. Procédé d'analyse de matériau échantillon (4) contenu dans un comprimé à l'aide d'un dispositif selon l'une des revendications précédentes, le matériau échantillon (4) étant pressé à l'aide d'une première surface de pressage (6) et le comprimé ainsi produit étant analysé, puis le comprimé étant à nouveau pressé et analysé à l'aide d'une deuxième surface de pressage (7) .

11. Procédé selon la revendication 10, **caractérisé en ce que** l'une des analyses comprend une analyse fluoroscopique aux rayons X et l'autre analyse comprend une analyse par diffraction des rayons X.

12. Procédé selon la revendication 11, **caractérisé en ce que** l'analyse fluoroscopique aux rayons X est effectuée avec la surface de pressage relativement lisse (6) à la suite du pressage du matériau échantillon (4) ou du comprimé et l'analyse par diffraction des rayons X est effectuée avec la surface de pressage relativement rugueuse (7) à la suite du pressage du matériau échantillon (4) ou du comprimé.
